# EUROPÄISCHE PATENTSCHRIFT

(11) **EP 2 227 335 B1**
(45) Veröffentlichungstag und Bekanntmachung des Hinweises auf die Patenterteilung: **18.05.2011**
(21) Anmeldenummer: 08863927.3
(22) Anmeldetag: 25.11.2008
(51) Int. Cl.: B04B 9/04, B04B 9/12

(54) **SEPARATOR MIT EINEM SCHMIERMITTELSYSTEM FÜR EINEN KURZSPINDELANTRIEB**
SEPARATOR HAVING A LUBRICANT SYSTEM FOR A SHORT SPINDLE DRIVE
SÉPARATEUR DOTÉ D'UN SYSTÈME LUBRIFIANT POUR UN ENTRAÎNEMENT À BROCHE COURTE

(30) Priorität: 21.12.2007 DE 102007061999
(43) Veröffentlichungstag der Anmeldung: 15.09.2010
(73) Patentinhaber: GEA Mechanical Equipment GmbH, 59302 Oelde (DE)
(72) Erfinder: HERMELER, Jürgen, 48336 Sassenberg (DE)
(74) Vertreter: Specht, Peter
(86) Internationale Anmeldenummer: PCT/EP2008/066168
(87) Internationale Veröffentlichungsnummer: WO 2009/080434

(56) Entgegenhaltungen:
- EP-A- 0 756 897
- DE-U1-202005 001 539

## Beschreibung

Die Erfindung betrifft einen Separator nach dem Oberbegriff des Anspruchs 1.

Derartige, insbesondere für einen industriellen Einsatz im kontinuierlichen Betrieb geeignete Separatoren, sind aus dem Stand der Technik an sich bekannt. Unter den bekannten Systemen gibt es Konstruktionen, bei denen die Trommel, die Antriebsspindel und der elektrische Antriebsmotor starr zu einer baulichen Einheit verbunden sind, welche dann als Ganzes elastisch an einem Maschinengestell abgestützt ist. Beispiele eines derartigen Standes der Technik offenbaren die FR 1.287.551, die DAS 1 057 979 und die DE 43 14 440 C1.

Die DE 2005 001 539 U 1 zeigt einen Separator, der einen Riementrieb aufweist und ein kreislaufartiges Schmiersystem zur Schmierung der Spindellagerung, welches wiederum eine rohrartige, schälscheibenartige Einrichtung zum Abpumpen von Schmiermittel aufweist, die dazu dient, Schmiermittel, welches aus der Lagerung der Antriebsspindel des Separatorantriebs austritt, über ein Aufbereitungsaggregat in einen Schmiermittelsumpf zu pumpen, in welchen die als Hohlspindel ausgebildete Antriebsspindel mit ihrem unteren Ende eintaucht. Diese Anordnung ist vertikal bzw. axial immer noch relativ lang.

Zum Stand der Technik werden ferner die US 1,745,853, die GB 344,244 und die DE 31 25 832 A 1 genannt.

Aus der WO 2007/125066 A1 ist ein Separator mit einem Direktantrieb bekannt, dessen Antriebsvorrichtung einen elektrischen Antriebsmotor mit einem Stator und einen Motorläufer aufweist, welcher mit der Antriebsspindel fluchtet, wobei der Stator starr mit dem Maschinengestell verbunden ist und der Motorläufer, die Antriebsspindel, die Schleudertrommel und das Gehäuse eine elastisch an dem Maschinengestell abgestützte, im Betrieb schwingende Einheit bilden. Dabei wird die Lagereinrichtung zwischen dem Motor und der Trommel angeordnet. Es wird ferner vorgeschlagen, die Schmierung der Lagereinrichtungen oberhalb einer Trennwand über dem Antriebsmotor unterzubringen. Es wird ferner ein Schmiermittelbehälter in einer sich mit der Antriebsspindel drehenden Ausgestaltung offenbart.

Die Erfindung hat vor diesem Hintergrund die Aufgabe, den Aufbau und die Anordnung des Schmiersystems von Separatoren mit vertikaler Drehachse weiter zu verbessem.

Die Erfindung erreicht dieses Ziel durch den Gegenstand des Anspruchs 1.

Diese Anordnung ermöglicht die Realisierung einer in vertikaler Richtung besonders kurzen Bauform der Antriebsvorrichtung. Die Spindel kann - da vorzugsweise sie nicht für den Schmiermittelkreislauf verwendet wird - für andere Aufgaben wie eine Produktzufuhr - z.B. durch eine Hohlspindel - genutzt werden.

Die Größe des Motors, der zum Antrieb des Separators eingesetzt werden kann, ist durch die Maschinendynamik des Separators begrenzt. Als Grenze für einen zulässigen Separatorenbetrieb gilt in der Praxis die zweite Eigenfrequenz des Antriebssystems. Die Betriebsdrehzahl muss einen ausreichenden Abstand zu dieser Eigenfrequenz aufweisen.

Durch die Rotormasse des Motors am unteren Spindelende sinkt die zweite Eigenfrequenz des Gesamtantriebs, wodurch die maximal mögliche Drehzahl eingeschränkt bzw. das maximale Gewicht des Motors - und somit die Leistung - beschränkt ist. Aufgrund der maschinendynamischen Restriktion muss der Rotor des Motors relativ nah an die Lagerung gebracht werden, so dass bei derzeit ausgeführten integrierten Antrieben die Umlaufschmierung einen zusätzlichen Schmiermitteltank mit Pumpe aufweist.

Erfindungsgemäß werden die maschinendynamischen Grenzen des integrierten Antriebs weiter angehoben, so dass höhere Drehzahlen bzw. leistungsstarke Motoren für den integrierten Antrieb möglich werden. Zudem ist die Ölumlaufschmierung in den Antrieben integriert, wodurch der separate Schmiermitteltank mit Ölpumpe entfallen kann. Vorzugsweise wird der Motorläufer über einen Teil oder über seine gesamte axiale bzw. vertikale Länge als Hülse ausgeführt.

Damit liegt der Schwerpunkt des Rotors näher am Fußlager der Spindel, wodurch die Eigenfrequenz des Antriebssystems ansteigt. Es ist sogar denkbar, den Schwerpunkt des Motorläufers zwischen den beiden Lagern der Spindeln zu legen. In den als Hülse geformten Motorläufer kann eine vollständige Umlaufschmierung integriert werden.

Neben den vorstehend erläuterten maschinendynamischen Vorteilen ergeben sich durch das System noch weitere hervorzuhebende Besonderheiten.

So ermöglicht die Konstruktion auf einfache Weise einen Produktzulauf über ein freies Ende der Spindel, wenn diese als Hohlspindel ausgeführt wird.

Darüber hinaus ist der Schmiermittel-Sammelbehälter gut von unten zugänglich (z.B. eine Ölablassschraube, konvektive Kühlung ...).

Der Stator des Motors kann wahlweise als mitschwingende Konstruktion an die Lagerlaterne bzw. das Gehäuse angebunden sein oder aber über Federelemente entkoppelt und mit dem Maschinengestell direkt verbunden sein.

Der Bereich des Motors kann baulich von Elementen des Schmiermittelsystems klar getrennt werden. Der vorzugsweise mitrotierende Schmiermittel-Sammelbehälter bietet zudem den Vorteil, dass er auf engem Raum ein relativ großes Ölvolumen aufnehmen kann und dass in ihn ein Mittel zur Förderung von Öl, beispielsweise ein schälscheibenartiges Förderorgan zum Pumpen von Öl oder ein Förderrohr in die Lagerung, integrierbar ist.

Vorteilhafte Ausgestaltungen sind den Unteransprüchen zu entnehmen.

Nachfolgend wird die Erfindung anhand eines Ausführungsbeispiels unter Bezug auf die Zeichnung näher beschrieben. Es zeigt:
- Fig. 1: eine Schnittansicht eines ersten schematisiert dargestellten erfindungs- gemäßen Antriebs eines Separators;
- Fig. 2: eine Schnittansicht eines zweiten schematisiert dargestellten erfin- dungsgemäßen Separators; und
- Fig. 3: eine Schnittansicht eines dritten schematisiert dargestellten erfindungs- gemäßen Separators.

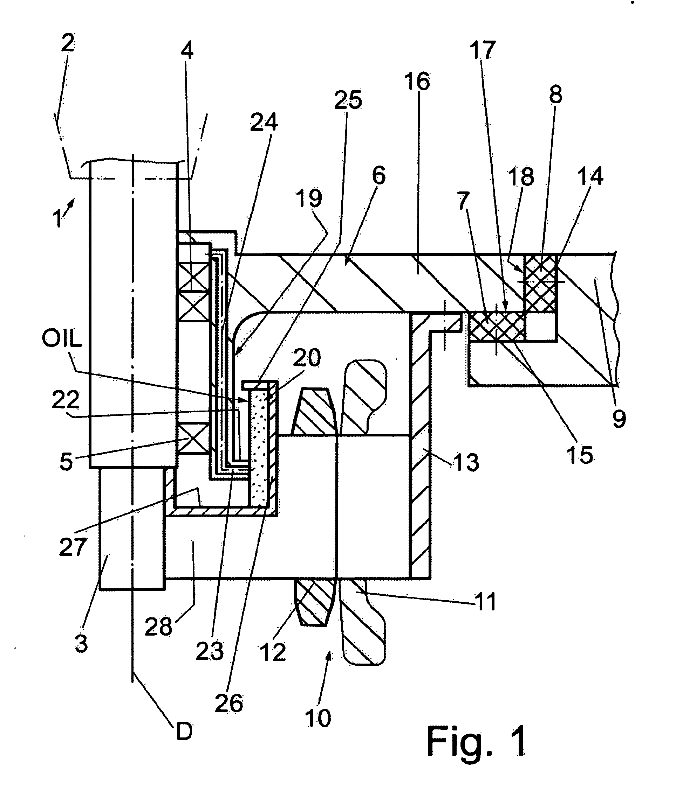

Fig. 1 zeigt einen Teilbereich eines Antriebs eines Separators 1 mit einer hier nur schematisch angedeuteten Schleudertrommel 2 mit vertikaler Drehachse D.

Die Schleudertrommel 2 ist auf eine Antriebsspindel 3 aufgesetzt. Die Antriebsspindel 3 ist mit einer Lagerung, die hier ein (oberes Lager) Halslager 4 und ein (unteres Lager) Fußlager 5 umfasst, drehbar in einem als Lagerlaterne dienenden Gehäuse 6 gelagert. Beispielhaft weist das Halslager 4 hier zwei Wälzlager und das Fußlager ein Wälzlager auf. Andere Ausgestaltungen beispielsweise mit nur einem Wälzlager als Halslager 4 oder zwei Wälzlagern als Fußlager 5 wären denkbar (hier nicht dargestellt). Alle Elemente der die Antriebsspindel 3 ganz oder im wesentlichen rotationssymmetrisch umgebenden Baugruppe sind hier der Einfachheit halber in der Zeichnung nur auf der rechten Seite der Antriebsspindel 3 dargestellt.

Das Gehäuse 6 ist mittels elastischen Elementen 7, 8, an einem Maschinengestellabschnitt 9 abgestützt, der als Teil eines übergeordneten Maschinengestells ausgelegt oder an einer Decke eines Gebäudes oder dgl. befestigt sein kann.

Zum Antrieb der Schleudertrommel 2 dient ein Separatorantrieb mit einem (Elektro-) Motor 10, der ein Motorgehäuse 13 mit einem Stator 11 bzw. einer Ständerwicklung und einen Motorläufer 12 aufweist.

Die Antriebsspindel 3 ist mit dem Motorläufer 12 drehfest verbunden.

Das Motorgehäuse 13 mit dem Stator 11 ist an das Gehäuse 6 angesetzt, was hier dadurch realisiert wird, dass das Motorgehäuse 13 direkt unten an das Gehäuse 6 angeschraubt ist.

Die Lagereinrichtung ist axial zwischen dem Motor 10 und der Schleudertrommel 2 angeordnet.

Die elastischen Elemente umfassen umfangsverteilt mehrere Anordnungen aus jeweils vorzugsweise zwei elastischen Elementen - vorzugsweise Gummielementen - 7, 8, die hier senkrecht zueinander ausgerichtet sind, wodurch sich eine besonders definierte Einstellung des Gelenkpunktes ergibt.

Die Anordnung der Paare von elastischen Elementen 7, 8 ist hier beispielhaft derart gewählt, dass die ersten Elemente 7 Mittelängsachsen aufweisen, die parallel zur Drehachse ausgerichtet sind und die zweiten elastischen Elemente 8 Längsachsen, die senkrecht zur Drehachse (radial) ausgerichtet sind.

Der Maschinengestellabschnitt 9 weist eine gestufte Form mit Wandabschnitten 14, 15 auf, an denen sich die elastischen Elemente 7, 8 abstützen.

Es ist auch denkbar, umlaufende Gummiringe als die elastischen Elemente 7, 8 vorzusehen.

Das Gehäuse 6 weist einen oberen flanschartigen Bereich 16 auf, an dessen Unterseite 17 und an dessen Außenumfang 18 sich die elastischen Elemente 7, 8 auf ihren vom Maschinengestellabschnitt 9 abgewandten Seiten abstützen.

An den flanschartigen Bereich 18 schließt sich innen ein axial nach unten hin erstreckender zylindrischer Gehäusebereich 19 an, der die Antriebsspindel 3 umgibt. Das Hals- und das Fußlager 4, 5 sind zwischen dem Innenumfang des Gehäusebereichs 19 und dem Außenumfang der Antriebsspindel 3 verteilt.

In dem nach oben und radial nach außen hin von dem Gehäuse 6 und dem Motorgehäuse 13 sowie nach innen hin von dem Gehäusebereich 19 des Gehäuses 6 begrenzten Bereich bzw. Raum ist ein Schmiermittel-Sammelbehälter 20 angeordnet, der sich axial bzw. vertikal bis in den Bereich des Motorläufers 12 hinein erstreckt, welcher den Motorläufer 12 konzentrisch jedenfalls über einen Teil seiner Länger nach Art einer Hülse umgibt.

Der Schmiermittel-Sammelbehälter 20 ist nach innen hin drehfest mit der Antriebsspindel 3 verbunden, so dass er sich mit dieser im Betrieb mitdreht. Der Schmiermittel-Sammelbehälter 20 kann sich mit einer oberen Ringwand 25 bis dicht an den Gehäuseabschnitt 19 heran erstrecken, ist aber nicht mit diesem verbunden. Der Schmiermittel-Sammelbehälter 20 ist derart ausgelegt, dass sich in ihm im Betrieb bei Drehungen Schmiermittel wie Öl radial außen sammelt, so dass sich in ihm im Betrieb ein Ölring mit einem Innendurchmesser OIL ausbildet. Nach außen hin wird der Schmiermittel-Sammelbehälter hier von einer zylindrischen, hülsenartigen Wand 26 begrenzt, die einstückig mit einer inneren Hülse des Motorläufers 12 ausgebildet sein kann.

Nach unten hin begrenzt den Schmiermittel-Sammelbehälter 20 eine Wand 27. Nach innen hin kann er sich bis an die Antriebsspindel 23 heran erstrecken. Unterhalb des Schmiermittel-Sammelbehälters 20 kann sich ein Abschnitt 28 des Motorläufers 12 bis an die Antriebsspindel 3 heran erstrecken und mit dieser verbunden sein (Fig. 1).

Der Schmiermittel-Sammelbehälter 20 kann an dieser Stelle hervorragend als mitrotierendes Element in die Konstruktion integriert werden und dabei dennoch ein vorteilhaft großes Volumen aufweisen.

Der Motorläufer 12 ist in dem Bereich, in welchem sich der Schmiermittel-Sammelbehälter 20 in ihn hinein erstreckt, konzentrisch zum Schmiermittel-Sammelbehälter 20 ausgebildet, welcher vertikal mit der hülsenartigen Wand 26 nach oben über den Motorläufer 12 vorsteht.

Der Schmiermittel-Sammelbehälter 20 kann auch konstruktiv mit dem Motorläufer 12 verbunden bzw. mit einer inneren Hülse des Motorläufers 12 einstückig ausgebildet sein.

Nach Fig. 1 erstreckt sich der Schmiermittel-Sammelbehälter 20 vertikal beispielhaft ca. über die obere Hälfte der vertikalen Klänge des Motorläufers 12. Diese Ausgestaltung ist rein beispielhaft zu verstehen. Der Schmiermittel-Sammelbehälter 20 könnte sich auch über weniger oder mehr als die halbe vertikale Länge des Motorläufers 12 bis diesen hinein erstrecken.

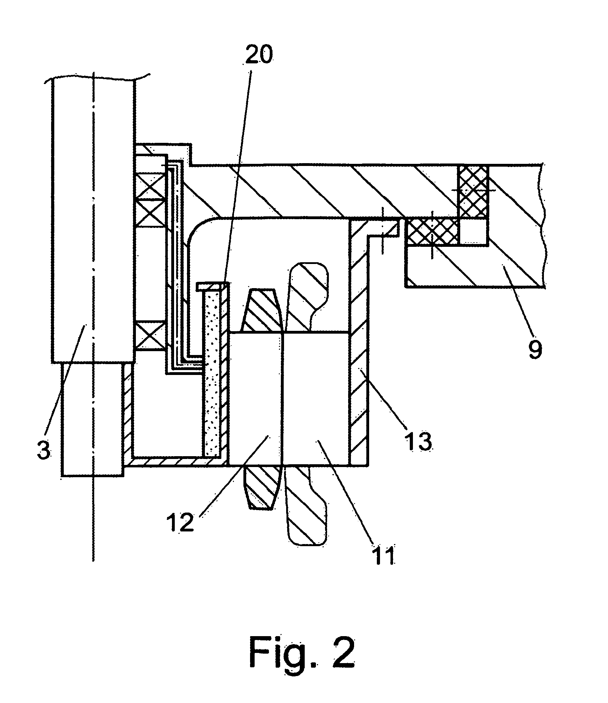

So zeigt Fig. 2 ein Ausführungsbeispiel, bei welchem sich der Schmiermittel-Sammelbehälter bis zum unteren vertikalen Ende der inneren Hülse des Motorläufers 12 erstreckt. Es wäre auch denkbar, dass er etwas nach untern über das untere vertikale Ende des Motorläufers 12 vorstehet.

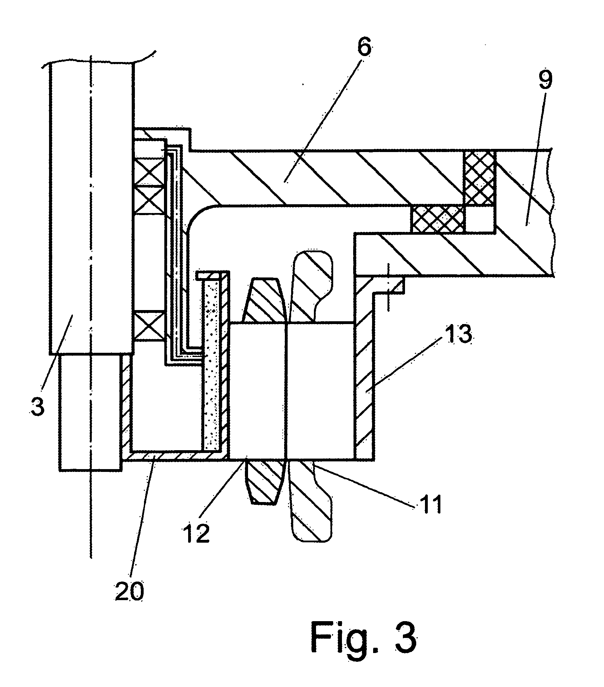

Nach Fig. 3 ist der Motorläufer nicht mit dem Gehäuse 6 sondern mit dem Maschinengestell 9 verbunden. Auch hier sind Schmiermittel-Sammelbehälteranordnungen nach Art der Fig. 1 und 2 realisierbar, bei welchen sich der Schmiermittel-Sammelbehälter 20 von oben her vertikal bis in den Bereich des Motorläufers 12 hinein erstreckt, der diesen und die Antriebsspindel 3 konzentrisch umgibt. Der Schmiermittel-Sammelbehälter umgibt wiederum nach Art eines Ringraums konzentrisch die Antriebsspindel 3.

Die Auslegung ist dabei derart, dass sich der Motorläufer 12, welcher die Schwingung und Bewegung der Antriebsspindel 3 mit vollzieht, noch frei im Stator 11 drehen kann, ohne diesen zu berühren.

In den unteren Bereich des Schmiermittel-Sammelbehälters ragt als ein Mittel zur Förderung von Öl, das hier in vorteilhafter Ausgestaltung als ein rohrartiger Ansatz 22 ausgestaltet ist, der derart angeordnet und ausgelegt ist, dass er im Betrieb in das außen im Schmiermittel-Sammelbehälter gesammelte Schmiermittel - z.B. ein Öl - eintaucht. Der Ansatz 22 ragt in eine radiale Bohrung 23 im Gehäuse 6, die in einen sich axial bis in den Bereich oberhalb des Halslagers 4 erstreckenden Schmiermittelkanal 24 übergeht. Diese schälscheibenartige Anordnung dient dazu, das Schmiermittel aus dem Schmiermittel-Sammelbehälter 20 in den Bereich zwischen dem Innenumfang des Gehäuses 6 und dem Außenumfang der Antriebsspindel 3 oberhalb des Halslagers 4 zu fördern. Zur besseren Förderung kann das Rohr 24 auch entgegen der Drehrichtung gebogen sein.

Bei Drehungen der Antriebspindel 3 wird Schmiermittel nach außen geführt und am Ölspiegel OIL durch den Schmiermittelkanal 24 nach oben gepumpt.

Aus dem Schmiermittelkanal 24 austretendes Schmiermittel kann sodann nach unten hin durch das Hals- und das Fußlager 4, 5 laufen und von dort nach unten hin zurück in den Schmiermittel-Sammelbehälter 20, wo es sich aufgrund der Zentrifugalwirkung radial außen sammelt.

Derart wird auf engstem Raum ein definiert auslegbarer und sicher arbeitender, vollständiger Schmiermittelkreislauf zur Schmierung der Lagerung der Zentrifuge realisiert. Der Bereich des Antriebsmotors 10 ist auf einfache Weise von dem Schmiermittelsystem bzw. -kreislauf getrennt, obwohl sich der Antriebsmotor und der Schmiermittel-Sammelbehälter vertikal abschnittsweise oder sogar ganz überlappen können.

Der rotierende Schmiermittel-Sammelbehälter 20 bietet auch den Vorteil, dass sich mit ihm gut Wärme nach außen z.B. über Kühlrippen ableiten lässt. Auch Mittel zur Oberflächenvergrößerung wie Kühlrippen lassen sich einfach in den oder außen an dem Schmiermittel-Behälter 20 integrieren. Innere Rippen könnten den Mitnahmeeffekt für das Schmiermittel bei Drehungen erhöhen. Es wäre auch denkbar, z.B. im Gehäuse 6, Motorgehäuse 13 oder im Gestell 9 zur Lenkung des Kühlluftstroms Kühlöffnungen vorzusehen.

Dabei könnten auch Mittel zur Förderung eines Kühlluftstroms - vorzugsweise unter - an dem Schmierstoff-Sammelbehälter 21 vorgesehen sein.

### Bezugszeichen

- Separator: 1
- Schleudertrommel: 2
- Antriebsspindel: 3
- Halslager: 4
- Fußlager: 5
- Gehäuse: 6
- elastische Elemente: 7, 8
- Maschinengestellabschnitt: 9
- Motor: 10
- Motorgehäuse: 13
- Wandabschnitte: 14, 15
- Unterseite: 17
- Außenumfang: 18
- zylindrischer Gehäusebereich: 19
- Schmiermittel-Sammelbehälter: 20
- rohrartiger Ansatz: 22
- Bohrung: 23
- Schmiermittelkanal: 24
- Wand: 25
- Wand: 26
- Wand: 27
- Abschnitt: 28
- Drehachse: D
- Ölspiegel: OIL

## Patentansprüche

1. Separator (1), der folgendes aufweist:
a. eine Schleudertrommel (2) mit vertikaler Drehachse (D) und einer Zulaufleitung für ein zu verarbeitendes Schleudergut,
b. eine Antriebsspindel (3) für die Schleudertrommel, die mittels einer Lagerung drehbar in einem Gehäuse (6) gelagert ist, welches elastisch an einem Maschinengestell (9) abgestützt ist,
c. eine Antriebsvorrichtung mit einem elektrischen Antriebsmotor (10), der einen Stator (11) und einen Motorläufer (12) aufweist, welcher mit der Antriebsspindel (3) drehfest verbunden ist und diese vorzugsweise umgibt,
d. ein Schmiermittelsystem zur Schmierung der Lagerung, der vorzugsweise als Schmiermittelkreislauf ausgebildet ist und einen Schmiermittel-Sammelbehälter (20) aufweist,
**dadurch gekennzeichnet, dass**
e. der Schmiermittel-Sammelbehälter (20) als Ringraum ausgebildet ist, welcher zumindest auf einem Teilbereich seiner vertikalen Erstreckung konzentrisch von dem Motorläufer (12) umgeben ist.

2. Separator nach Anspruch 1, **dadurch gekennzeichnet, dass** der Schmiermittel-Sammelbehälter (20) nach oben hin über den oberen Randbereich des Motorläufers (12) vorsteht.

3. Separator nach Anspruch 1 oder 2, **dadurch gekennzeichnet, dass** sich der Schmiermittel-Sammelbehälter (20) den Motorläufer (12) vertikal über mehr als ein Drittel seiner vertikalen Erstreckung durchsetzt.

4. Separator nach Anspruch 3, **dadurch gekennzeichnet, dass** sich der Schmiermittel-Sammelbehälter (20) den Motorläufer (12) vertikal über mehr als die Hälfte seiner vertikalen Erstreckung durchsetzt.

5. Separator nach Anspruch 4, **dadurch gekennzeichnet, dass** sich der Schmiermittel-Sammelbehälter (20) den Motorläufer (12) vertikal über mehr als zwei Drittel seiner vertikalen Erstreckung durchsetzt.

6. Separator nach Anspruch 5, **dadurch gekennzeichnet, dass** sich der Schmiermittel-Sammelbehälter (20) den Motorläufer (12) vertikal über dessen gesamte vertikale Erstreckung durchsetzt.

7. Separator nach einem der vorstehenden Ansprüche, **dadurch gekennzeichnet, dass** der Motorläufer über einen Teil oder über seine gesamte axiale bzw. vertikale Länge als Hülse ausgeführt ist, welche zumindest einen Teil des Schmierstoff-Sammelbehälters (20) aufnimmt.

8. Separator nach einem der vorstehenden Ansprüche, **dadurch gekennzeichnet, dass** der Schmiermittel-Sammelbehälter (20) drehfest mit der Antriebspindel (3) verbunden ist.

9. Separator nach einem der vorstehenden Ansprüche, **dadurch gekennzeichnet, dass** zumindest eine Begrenzungswand des Schmiermittel-Sammelbehälters (20) einstückig mit einem Bauteil des Motorläufers (12) ausgebildet ist.

10. Separator nach einem der vorstehenden Ansprüche, **dadurch gekennzeichnet, dass** der Schmiermittel-Sammelbehälter (20) außen von einer zylindrischen, hülsenartigen Wand (26) begrenzt ist, die einstückig mit einer inneren Hülse des Motorläufers (12) ausgebildet ist.

11. Separator nach einem der vorstehenden Anspruche, **dadurch gekennzeichnet dass**
a. der Stator (11) starr mit dem Maschinengestell (9) verbunden ist,
b. der Motorläufer (12), die Antriebsspindel (3), die Schleudertrommel (2) und vorzugsweise das Gehäuse (6) eine elastisch an dem Maschinengestell abgestützte, im Betrieb schwingende Einheit bilden, und
c. die Lagereinrichtung zwischen dem Motor (10) und der Schleudertrommel (2) angeordnet ist.

12. Separator (1) nach einem der vorstehenden Ansprüche 1 bis 8, **dadurch gekennzeichnet, dass** das Motorgehäuse (13) mit dem Gehäuse (6) verbunden ist.

13. Separator (1) nach einem der vorstehenden Ansprüche, **dadurch gekennzeichnet, dass** der gesamte Schmiermittelkreislauf mit dem Schmiermittel-Sammelbehälter (20) axial oberhalb des unteren Randbereiches des Motorläufers (12) angeordnet ist.

14. Separator (1) nach einem der vorstehenden Ansprüche, **dadurch gekennzeichnet, dass** der Schmiermittel-Sammelbehälter einfach oder doppelt konisch ausgebildet ist.

15. Separator (1) nach einem der vorstehenden Ansprüche, **dadurch gekennzeichnet, dass** die Lagerung zumindest ein oberes Halslager (4) und zumindest ein unteres Fußlager (5) aufweist.

16. Separator (1) nach einem der vorstehenden Ansprüche, **dadurch gekennzeichnet, dass** das Gehäuse (6) mittels elastischen Elementen (7, 8), vorzugsweise mittels Rundlagern, an einer Maschinengestellwand (9) abgestützt ist.

17. Separator (1) nach einem der vorstehenden Ansprüche, **dadurch gekennzeichnet, dass** in den Schmiermittel-Sammelbehälter (20) ein Förderorgan für das Schmiermittel taucht.

18. Separator (1) nach einem der vorstehenden Ansprüche, **dadurch gekennzeichnet, dass** in den Schmiermittel-Sammelbehälter (20) ein Ansatz (22) oder ein Ende eines sich axial bis in den Bereich oberhalb des Halslagers erstreckenden Schmiermittelkanals (24) eintaucht, der als das Förderorgan dazu dient, das Schmiermittel aus dem Schmiermittel-Sammelbehälter (20) schälscheibenartig in den Bereich zwischen dem Innenumfang des Gehäuses (6) und dem Außenumfang der Antriebsspindel (3) oberhalb der Lagerung zu fördern, von wo es nach unten hin durch die Lagerung und von dort nach unten hin zurück in den Schmiermittel-Sammelbehälter (20) läuft.

19. Separator nach einem der vorstehenden Ansprüche, **dadurch gekennzeichnet, dass** der Motorläufer (12) die Antriebsspindel (3) und den Schmiermittel-Sammelbehälter (20) jedenfalls abschnittsweise konzentrisch umgibt.

20. Separator nach einem der vorstehenden Ansprüche, **dadurch gekennzeichnet, dass** der Schmiermittel-Sammelbehälter nach Art eines Ringraums konzentrisch die Antriebsspindel (3) umgibt.

21. Separator nach einem der vorstehenden Ansprüche, **dadurch gekennzeichnet**, die Mittel zur Förderung eines Kühlluftstroms mit dem Schmierstoff-Sammelbehälter (20) verbunden sind.

## Claims

1. Separator (1) which has the following:
a. a centrifugal drum (2) with a vertical axis of rotation (D) and with an inflow line for centrifuging stock to be processed,
b. a drive spindle (3) for the centrifugal drum, which drive spindle is mounted rotatably by means of a mounting in a housing (6) which is supported elastically on a machine stand (9),
c. a drive device with an electric drive motor (10) having a stator (11) and a motor rotor (12) which is connected fixedly in terms of rotation to the drive spindle (3) and which preferably surrounds the latter,
d. a lubricant system for lubricating the mounting, which lubricant system is preferably designed as a lubricant circuit and has a lubricant collecting container (20),
**characterized in that**
e. the lubricant collecting container (20) is designed as an annular space which is concentrically surrounded, at least on a portion of its vertical extent, by the motor rotor (12).

2. Separator according to Claim 1, **characterized in that** the lubricant collecting container (20) projects upwards above the upper marginal region of the motor rotor (12).

3. Separator according to Claim 1 or 2, **characterized in that** the lubricant collecting container (20) passes vertically, over more than one third of its vertical extent, through the motor rotor (12).

4. Separator according to Claim 3, **characterized in that** the lubricant collecting container (20) passes vertically, over more than half its vertical extent, through the motor rotor (12).

5. Separator according to Claim 4, **characterized in that** the lubricant collecting container (20) passes vertically, over more than two thirds of its vertical extent, through the motor rotor (12).

6. Separator according to Claim 5, **characterized in that** the lubricant collecting container (20) passes vertically, over its entire vertical extent, through the motor rotor (12).

7. Separator according to one of the preceding claims, **characterized in that** the motor rotor is designed, over part or over its entire axial or vertical length, as a sleeve which receives at least part of the lubricant collecting container (20).

8. Separator according to one of the preceding claims, **characterized in that** the lubricant collecting container (20) is connected fixedly in terms of rotation to the drive spindle (3).

9. Separator according to one of the preceding claims, **characterized in that** at least one boundary wall of the lubricant collecting container (20) is integrally formed with a component of the motor rotor (12).

10. Separator according to one of the preceding claims, **characterized in that** the lubricant collecting container (20) is delimited on the outside by a cylindrical sleeve-like wall (26) which is formed in one piece with an inner sleeve of the motor rotor (12).

11. Separator according to one of the preceding claims, **characterized in that**
a. the stator (11) is connected rigidly to the machine stand (9),
b. the motor rotor (12), the drive spindle (3), the centrifugal drum (2) and preferably the housing (6) form a unit which is supported elastically on the machine stand and which oscillates during operation, and
c. the bearing device is arranged between the motor (10) and the centrifugal drum (2).

12. Separator (1) according to one of the preceding Claims 1 to 8, **characterized in that** the motor housing (13) is connected to the housing (6).

13. Separator (1) according to one of the preceding claims, **characterized in that** the entire lubricant circuit, together with the lubricant collecting container (20), is arranged axially above the lower marginal region of the motor rotor (12).

14. Separator (1) according to one of the preceding claims, **characterized in that** the lubricant collecting container is of singly or doubly conical design.

15. Separator (1) according to one of the preceding claims, **characterized in that** the mounting has at least one upper neck bearing (4) and at least one lower foot bearing (5).

16. Separator (1) according to one of the preceding claims, **characterized in that** the housing (6) is supported on a machine stand wall (9) by means of elastic elements (7, 8), preferably by means of round bearings.

17. Separator (1) according to one of the preceding claims, **characterized in that** a conveying member for the lubricant penetrates into the lubricant collecting container (20).

18. Separator (1) according to one of the preceding claims, **characterized in that** an extension (22) or one end of a lubricant duct (24) extending axially into the region above the neck bearing penetrates into the lubricant collecting container (20) and serves, as the conveying member, for conveying the lubricant out of the lubricant collecting container (20) in the manner of a skimming disc into the region between the inner circumference of the housing (6) and the outer circumference of the drive spindle (3), above the mounting, from where the said lubricant runs downwards through the mounting and from there downwards back into the lubricant collecting container (20).

19. Separator according to one of the preceding claims, **characterized in that** the motor rotor (12), in any event partially, surrounds the drive spindle (3) and the lubricant collecting container (20) concentrically.

20. Separator according to one of the preceding claims, **characterized in that** the lubricant collecting container surrounds the drive spindle (3) concentrically in the manner of an annular space.

21. Separator according to one of the preceding claims, **characterized in that** the means for conveying a cooling-air stream are connected to the lubricant collecting container (20).

## Revendications

1. Séparateur (1), présentant :
a. un panier centrifuge (2) avec un axe de rotation (D) vertical et une conduite d'arrivée pour un résidu sec obtenu à usiner,
b. une bielle de commande (3) pour le panier centrifuge, laquelle est logée dans un boîtier (6) de manière à pouvoir tourner au moyen d'un palier, lequel boîtier est appuyé de manière élastique au niveau d'un bâti de machine (9),
c. un mécanisme de commande avec un moteur de commande (10) électrique, lequel moteur de commande présente un stator (11) et un rotor de moteur (12) qui est relié de manière résistante à la torsion à la bielle de commande (3) et entoure de préférence cette dernière,
d. un système de lubrification servant à lubrifier le palier, lequel système est réalisé de préférence comme un circuit de lubrification et présente un réservoir collecteur de lubrifiant (20),
**caractérisé en ce que**
e. le réservoir collecteur de lubrifiant (20) est réalisé comme un espace annulaire, lequel est entouré de manière concentrique par le rotor de moteur (12), au moins sur une zone partielle de son extension verticale.

2. Séparateur selon la revendication 1, **caractérisé en ce que** le réservoir collecteur de lubrifiant (20) se trouve en allant vers le haut au-dessus de la zone de bord supérieure du rotor de moteur (12).

3. Séparateur selon la revendication 1 ou 2, **caractérisé en ce que** le réservoir collecteur de lubrifiant (20) dépasse le rotor de moteur (12) de manière verticale au-dessus de plus d'un tiers de son extension verticale.

4. Séparateur selon la revendication 3, **caractérisé en ce que** le réservoir collecteur de lubrifiant (20) dépasse le rotor de moteur (12) de manière verticale au-dessus de plus de la moitié de son extension verticale.

5. Séparateur selon la revendication 4, **caractérisé en ce que** le réservoir collecteur de lubrifiant (20) dépasse le rotor de moteur (12) de manière verticale au-dessus de plus de deux tiers de son extension verticale.

6. Séparateur selon la revendication 5, **caractérisé en ce que** le réservoir collecteur de lubrifiant (20) dépasse le rotor de moteur (12) de manière verticale au-dessus de la totalité de l'extension verticale de ce dernier.

7. Séparateur selon l'une quelconque de revendications précédentes, **caractérisé en ce que** le rotor de moteur est réalisé comme une douille sur une partie ou sur la totalité de sa longueur axiale et/ou verticale, laquelle douille reçoit au moins une partie du réservoir collecteur de lubrifiant (20).

8. Séparateur selon l'une quelconque des revendications précédentes, **caractérisé en ce que** le réservoir collecteur de lubrifiant (20) est relié de manière résistante à la torsion à la bielle de commande (3).

9. Séparateur selon l'une quelconque des revendications précédentes, **caractérisé en ce qu'**au moins une paroi de délimitation du réservoir collecteur de lubrifiant (20) est réalisée d'un seul tenant avec un composant du rotor de moteur (12).

10. Séparateur selon l'une quelconque des revendications précédentes, **caractérisé en ce que** le réservoir collecteur de lubrifiant (20) est délimité à l'extérieur par une paroi (26) cylindrique en forme de douille, laquelle paroi est réalisée en un seul tenant avec une douille intérieure du rotor de moteur (12).

11. Séparateur selon l'une quelconque des revendications précédentes, **caractérisé en ce que**
a. le stator (11) est relié de manière rigide au bâti de machine (9) ;
b. le rotor de moteur (12), la bielle de commande (3), le panier centrifuge (2) et de préférence le boîtier (6) forment une unité s'appuyant de manière élastique au niveau du bâti de machine, oscillant lors du fonctionnement, et
c. le système de palier est disposé entre le moteur (10) et le panier centrifuge (2).

12. Séparateur (1) selon l'une quelconque des revendications 1 à 8, **caractérisé en ce que** le boîtier de moteur (13) est relié au boîtier (6).

13. Séparateur (1) selon l'une quelconque des revendications précédentes, **caractérisé en ce que** le circuit entier de lubrification avec le réservoir collecteur de lubrifiant (20) est disposé de manière axiale au-dessus de la zone de bord inférieure du rotor de moteur (12).

14. Séparateur (1) selon l'une quelconque des revendications précédentes, **caractérisé en ce que** le réservoir collecteur de lubrifiant est réalisé de manière simple ou de manière doublement conique.

15. Séparateur (1) selon l'une quelconque des revendications précédentes, **caractérisé en ce que** le palier présente au moins un collet supérieur (4) et au moins une crapaudine inférieure (5).

16. Séparateur (1) selon l'une quelconque des revendications précédentes, **caractérisé en ce que** le boîtier (6) s'appuie au moyen d'éléments élastiques (7, 8), de préférence au moyen de paliers ronds, au niveau d'une paroi du bâti de machine (9).

17. Séparateur (1) selon l'une quelconque des revendications précédentes, **caractérisé en ce qu'**un organe de transport pour le lubrifiant plonge dans le réservoir collecteur de lubrifiant (20).

18. Séparateur (1) selon l'une quelconque des revendications précédentes, **caractérisé en ce qu'**une saillie (22) ou une extrémité d'un canal de lubrifiant (24) s'étendant de manière axiale jusque dans la zone au-dessus du collet supérieur plonge dans le réservoir collecteur de lubrifiant (20), lequel canal pour lubrifiant sert en tant qu'organe de transport à transporter le lubrifiant hors du réservoir collecteur de lubrifiant (20) dans la zone située entre le volume intérieur du boîtier (6) et le volume extérieur de la bielle de commande (3) au-dessus du palier, d'où il circule vers le bas à travers le palier et de là, revient vers le bas dans le réservoir collecteur de lubrifiant (20).

19. Séparateur selon l'une quelconque des revendications précédentes, **caractérisé en ce que** le rotor de moteur (12) entoure de manière concentrique, le cas échéant par sections, la bielle de commande (3) et le réservoir collecteur de lubrifiant (20).

20. Séparateur selon l'une quelconque des revendications précédentes, **caractérisé en ce que** le réservoir collecteur de lubrifiant entoure de manière concentrique, à la façon d'un espace annulaire, la bielle de commande (3).

21. Séparateur selon l'une quelconque des revendications précédentes, **caractérisé en ce que** les moyens servant au transport d'un flux d'air de refroidissement sont reliés au réservoir collecteur de lubrifiant (20).
